# EUROPEAN PATENT SPECIFICATION

(11) **EP 3 223 129 B1**
(45) Date of publication and mention of the grant of the patent: **11.09.2019**
(21) Application number: 15861186.3
(22) Date of filing: 16.11.2015
(51) Int. Cl.: G06F 3/0488, G06F 3/0481, G06F 3/0484, H04L 9/32, G06F 21/32

(54) **OPERATING DEVICE AND OPERATING METHOD**
BETRIEBSVORRICHTUNG UND BETRIEBSVERFAHREN
DISPOSITIF ET PROCÉDÉ D'EXPLOITATION

(30) Priority: 21.11.2014 JP 2014236413
(43) Date of publication of application: 27.09.2017
(73) Proprietor: KYOCERA Document Solutions Inc., Osaka-shi, Osaka 540-8585 (JP)
(72) Inventor: OKABAYASHI, Yoshifumi, Osaka-shi Osaka 540-8585 (JP)
(74) Representative: Winter, Brandl, Fürniss, Hübner, Röss, Kaiser, Polte - Partnerschaft mbB
(86) International application number: PCT/JP2015/082164
(87) International publication number: WO 2016/080363

(56) References cited:
- WO-A1-2013/035724
- JP-A- H09 167 058
- JP-A- 2007 516 507
- JP-A- 2011 118 769
- US-A1- 2010 290 068
- US-A1- 2014 173 721
- US-A1- 2014 292 649

## Description

### Technical Field

The present invention relates to an operating device and an operating method.

### Background Art

When an operating device is provided with an authentication function, a user typically performs user authentication by predetermined authentication means (such as password authentication, IC card authentication, or fingerprint authentication). If the user authentication is successfully done, a screen on a touch panel of the operating device transitions to an initial screen or a home screen. By operating the initial screen after the transition, the user can send a command to an electronic apparatus (for example, an image forming apparatus) connected to the operating device to use a desired function.

In the electronic apparatus as described above, however, the user needs to carry out the authentication operation and the screen operation after the authentication separately. Thus, such a device disadvantageously has poor operability for the user.

In view of this, as techniques to solve such a problem, (a) Japanese Patent Application Laid-Open No. 2008-46692 (Patent Literature 1) discloses an input device that brings up a particular function by associating fingerprint authentication with a finger action, and (b) Japanese Patent Application Laid-Open No. 2012-194731 (Patent Literature 2) discloses a display device that operates according to vibrations corresponding to function settings, for example.

### Citation List

### Patent Literature

Patent Literature 1: Japanese Patent Application Laid-Open No. 2008-46692.
Patent Literature 2: Japanese Patent Application Laid-Open No. 2012-194731.

### Summary of Invention

### Technical Problem

In the technique described in Patent Literature 1, however, a register operation for linking a finger action to a function is required. Thus, it disadvantageously takes time and effort before a user can use the operating device. Moreover, the number of functions that can be registered with respect to finger actions is limited. When a new function is added, association between the functions after the registration and finger actions needs to be updated. In the technique described in Patent Literature 2, the vibrations and an authentication operation are independent of each other. Thus, a user disadvantageously needs to perform the authentication operation and a screen operation separately.

Moreover, document US 2014/0292649 A1 discloses a task switching method capable of rapidly and easily accessing a task of interest by using a button that may receive a touch-based input and a device for executing the task switching method. The device includes a button configured to receive an input; a display configured to display task switching screens; and a processor configured to set a task switching mode in response to the button receiving a first input, and control the display to display the task switching screens in response to the button receiving a second input.

Thus, the present invention has been made to solve the aforementioned problems. It is therefore an object of the present invention to provide an operating device and an operating method allowing a user to perform an authentication operation and a screen operation at the same time. The object is solved by the features of the independent claims. The dependent claims are directed to preferred embodiments of the invention.

Embodiments which do not fall within the scope of the claims do not describe part of the present invention.

### Solution to Problem

An operating device according to one aspect of the present invention includes a user authentication unit, an icon acquisition unit, an icon switching unit, and a function transition unit. When a user's finger is pressed on a fingerprint reading region in which fingerprint information of the user's finger is read, the user authentication unit reads the fingerprint information of the user's finger and determines whether or not the read fingerprint information matches registered fingerprint information that is registered in advance. If the read fingerprint information matches the registered fingerprint information, the icon acquisition unit acquires icons indicating functions that can be used by the user of the read fingerprint information. If the press by the user's finger is continued, the icon switching unit switches, every predetermined switching time, the acquired icons for display in the vicinity of the user's finger in order in which the icons are acquired. If the press by the user's finger is released while the icons are switched for display, the function transition unit transitions to a function of an icon displayed at a time when the press by the user's finger is released.

An operating method according to one aspect of the present invention includes a user authentication step, an icon acquisition step, an icon switching step, and a function transition step. When a user's finger is pressed on a fingerprint reading region in which fingerprint information of the user's finger is read, the user authentication step reads the fingerprint information of the user's finger and determines whether or not the read fingerprint information matches registered fingerprint information that is registered in advance. If the read fingerprint information matches the registered fingerprint information, the icon acquisition step acquires icons indicating functions that can be used by the user of the read fingerprint information. If the press by the user's finger is continued, the icon switching step switches, every predetermined switching time, the acquired icons for display in the vicinity of the user's finger in order in which the icons are acquired. If the press by the user's finger is released while the icons are switched for display, the function transition step transitions to a function of an icon displayed at a time when the press by the user's finger is released.

### Advantageous Effects of Invention

According to the operating device and the operating method of the present invention, a user can perform the authentication operation and the screen operation at the same time.

### Brief Description of Drawings

FIG. 1 is a conceptual diagram illustrating an overall configuration of an image processing apparatus including an operating device according to an embodiment of the present invention.
FIG. 2 is a functional block diagram of the image processing apparatus including the operating device according to the embodiment of the present invention.
FIG. 3 is a flow chart illustrating an execution procedure according to the embodiment of the present invention.
FIG. 4A is a diagram illustrating an example of a login screen used in the embodiment of the present invention.
FIG. 4B is a diagram illustrating an example of an icon table used in the embodiment of the present invention.
FIG. 5A is a diagram illustrating a display example of a first icon used in the embodiment of the present invention.
FIG. 5B is a diagram illustrating a display example of a second icon used in the embodiment of the present invention.
FIG. 6A is a diagram illustrating an example of a function screen used in the embodiment of the present invention.
FIG. 6B is a diagram illustrating an example of an initial screen used in the embodiment of the present invention.

### Description of Embodiments

An embodiment of an operating device and an operating method according to the present invention will be described below with reference to the accompanying drawings. Note that the following embodiment is merely an example embodying the present invention and should not be construed as limiting the technical scope of the present invention.

An image processing apparatus including an operating device (operating unit) will be described below as an example of the embodiment of the present invention.

Note that examples of the image processing apparatus are a multi-function peripheral (MFP) including functions, such as a facsimile, a copy, a scanner, and a printer, a copy machine, a printer, and the like.

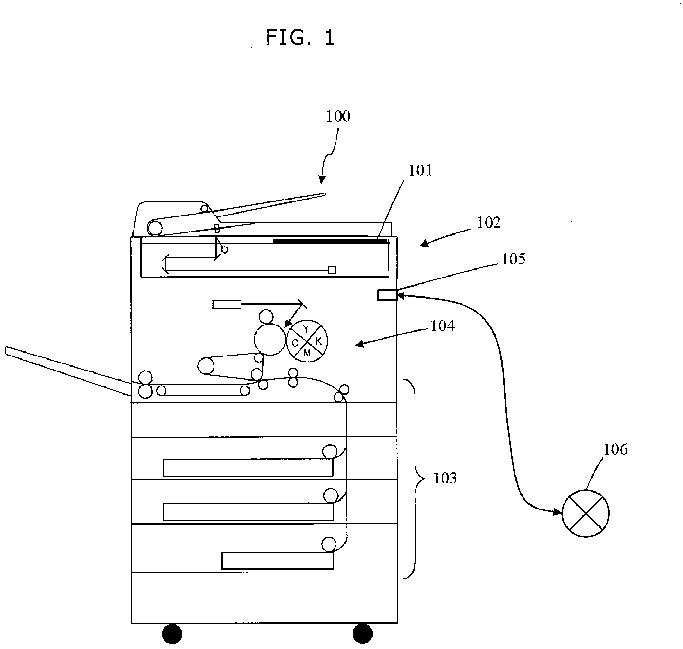

As shown in FIG. 1, an image processing apparatus 100 receives setting conditions of a predetermined job from a user via an operating unit 101. The job refers to a job including, for example, any one of a copying function, a facsimile function, a scanning function, and a printing function or any combination thereof. Moreover, the operating unit 101 includes a touch panel to display predetermined screens and detect finger contact from the user. Furthermore, the operating unit 101 includes a fingerprint reading unit for reading a fingerprint of a user's finger in the touch panel. When the user brings the ball of his/her finger into contact with the touch panel, the fingerprint reading unit reads the fingerprint of the ball of the finger.

Once receiving the setting conditions of the job via the operating unit 101, the image processing apparatus 100 drives various units such as an image reading unit 102, a conveying unit 103, an image forming unit 104, and a communication unit 105 to execute the job. The image reading unit 102 reads image data of a document placed on a document glass or an automatic document feeder. The conveying unit 103 conveys a sheet of paper from a paper cassette or a manual feed tray to the image forming unit 104. The image forming unit 104 carries out image formation by transferring a toner image corresponding to the image data to the conveyed sheet of paper and fixing the transferred image with a fuser roller. The communication unit 105 is connected to a network 106 to transmit the image data to a predetermined destination according to the setting conditions.

Although not shown in the figure, the image processing apparatus 100 and the operating unit 101 each have a control circuit which includes a central processing unit (CPU), a read only memory (ROM), a random access memory (RAM), a hard disk drive (HDD), a solid state drive (SSD), and a driver corresponding to each of the drive units. These are connected to one another via an internal bus.

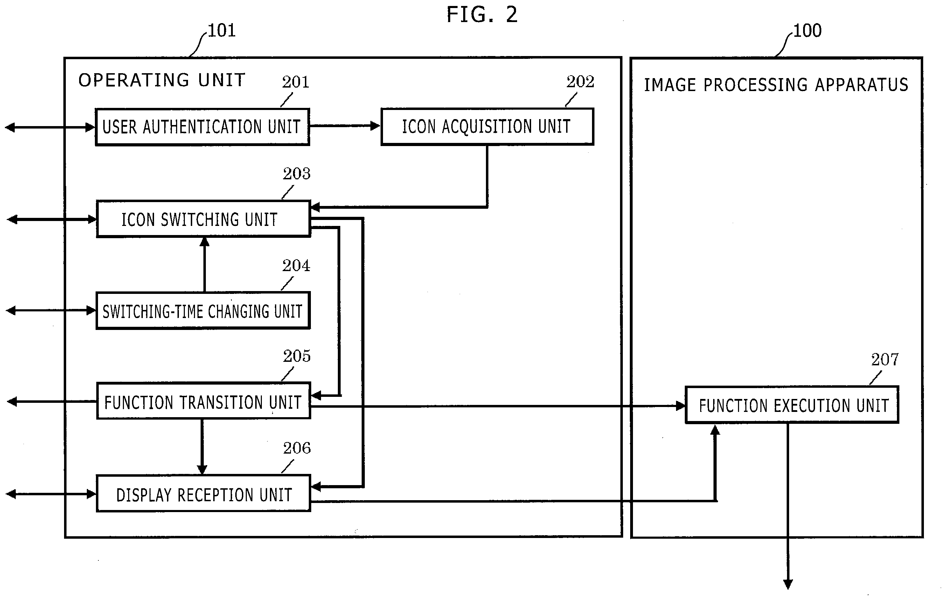

The CPU of the image processing apparatus 100 and the operating unit 101 uses the RAM as a workspace, for example, to execute programs stored in the ROM, HDD, SSD, and the like, and receives and transmits data, instructions, signals, commands, and the like from the driver on the basis of the execution result. In this manner, the CPU controls operations of the respective drive units associated with the execution of the job. As to later-described units (shown in FIG. 2) other than the drive units, the CPU also executes corresponding programs to implement such units. The ROM, the RAM, the HDD, the SSD, and the like store programs or data for implementing the respective units to be described below.

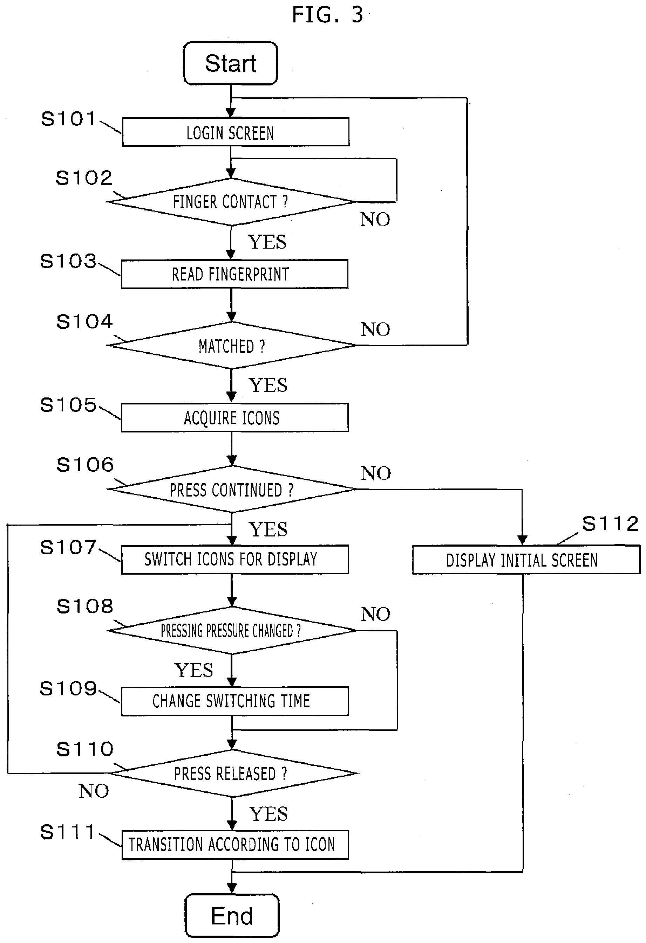

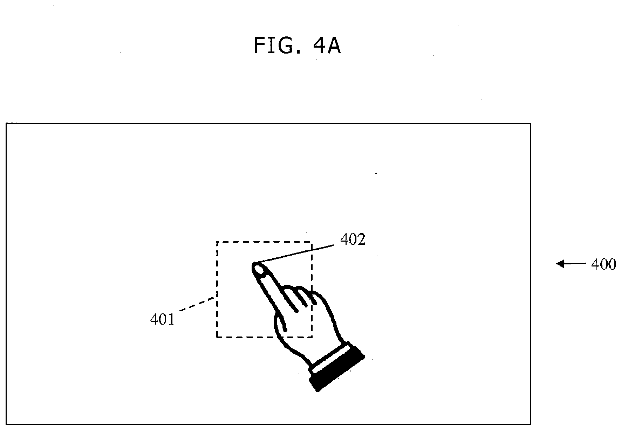

With reference to FIGS. 2 and 3, a configuration and an execution procedure according to the embodiment of the present invention will be described next. First, when a user powers on the image processing apparatus 100, a user authentication unit 201 in the operating unit 101 of the image processing apparatus 100 displays a login screen 400 (FIG. 4A) including a fingerprint reading region for reading fingerprint information of a user's finger on the touch panel (FIG. 3: Step S101). The user authentication unit 201 then accepts the input of the fingerprint information from the user.

Here, the method of displaying the login screen 400 by the user authentication unit 201 is not limited to any particular method. For example, the login screen 400 is configured in such a way that no information such as text is shown and a fingerprint reading region 401 is provided in a near-center region as shown in FIG. 4A. Note that the fingerprint reading region 401 may be provided in any region in the login screen 400 or over the entire region without being limited to the near-center region. In addition to the fingerprint reading region 401, a message such as "Please touch by ball of your finger" may be provided in order to facilitate the input of the fingerprint information by the user. Furthermore, an input screen capable of another user authentication method, i.e., inputting a user ID and a password, may be provided so that the user can perform user authentication without the use of the fingerprint information of the user's finger.

When the user brings the ball of his/her finger 402 into contact with the fingerprint reading region 401 while viewing the login screen 400 (when the user presses the fingerprint reading region 401 by the finger 402), the user authentication unit 201 detects the contact of the ball of the user's finger 402 (FIG. 3: YES in Step S102). The user authentication unit 201 then reads the fingerprint information of the user's finger 402 via the fingerprint reading region 401 (FIG. 3: Step S103). The method of reading the fingerprint information is not limited to any particular method. Any known method can be adopted.

The user authentication unit 201 then collates the read fingerprint information of the user's finger 402 with registered fingerprint information that is registered in advance to determine whether or not the read fingerprint information of the user's finger 402 matches the registered fingerprint information (FIG. 3: Step S104). The method of collating the fingerprint information is not limited to any particular method. Any known method can be adopted.

If the read fingerprint information of the user's finger 402 fails to match the above-described registered fingerprint information as a result of the above-described determination (FIG. 3: NO in Step S104), the user authentication unit 201, for example, displays an error screen indicating that the read fingerprint information is incorrect. The user authentication unit 201 then returns to Step S101, displays the login screen 400, and accepts the input of correct fingerprint information from the user again (FIG. 3: Step S101).

On the other hand, if the read fingerprint information of the user's finger 402 matches the above-described registered fingerprint information as a result of the above-described determination in Step S104 (FIG. 3: YES in Step S104), the user authentication unit 201 notifies an icon acquisition unit 202 of the result. The notified icon acquisition unit 202 acquires icons indicating functions that can be used by the user of the matched fingerprint information (FIG. 3: Step S101).

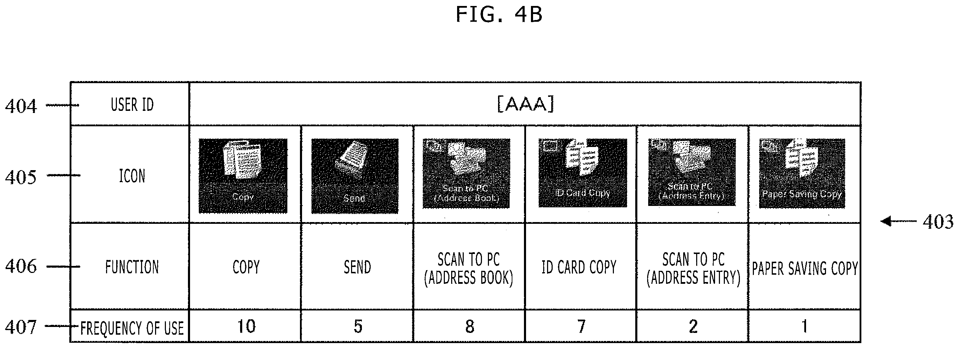

Here, the method of acquiring icons by the icon acquisition unit 202 is not limited to any particular method. For example, the icon acquisition unit 202 acquires a user ID (for example, "AAA") for identifying the user of the fingerprint information from the user authentication unit 201, and then refers to an icon table 403 (FIG. 4B) corresponding to that user ID.

As shown in FIG. 4B, a user ID 404 ("AAA"), icons 405 indicating functions that can be used by the user having the user ID 404, functions 406 of the icons (for example, "Copy," etc.), and frequencies 407 of use each indicating the number of times the user having the user ID 404 has used the function 406 of the icon 405 in a predetermined period of time (for example, "January") are stored in the icon table 403 in association with one another. Note that "Copy," "Send" indicating facsimile transmission or e-mail transmission, "Scan to PC (Address Book)" for transmitting scanned image data to a PC (terminal device) in an address book that is registered in advance, "ID Card Copy" for executing the printing of the front and back of a certificate such as a driver's license, "Scan to PC (Address Entry)" for transmitting scanned image data to a destination inputted by a user as desired, and "Paper Saving Copy" for printing with lower-grade paper are set in the functions 406. Storing the predetermined icons 405 and functions 406 in association with the user ID 404 allows such information to serve as authorized information for the user having the user ID 404.

The icon acquisition unit 202 may simply acquire the icons 405 ("Copy," "Send," "Scan to PC (Address Book)," etc.) in the order in which the icons 405 are stored. Alternatively, by taking the frequencies 407 of use corresponding to the icons 405 into consideration, the icon acquisition unit 202 may acquire the icons 405 ("Copy," "Scan to PC (Address Book)," "ID Card Copy," etc.) in the descending order from the function 406 having the highest frequency 407 of use for the user.

When the icon acquisition unit 202 completes the acquisition of the icons, the icon acquisition unit 202 notifies an icon switching unit 203 of such completion. The notified icon switching unit 203 determines whether or not the press by the user's finger 402 (contact of the ball of the user's finger 402) is continued (FIG. 3: Step S106).

If the press by the user's finger 402 is continued as a result of the above-described determination (FIG. 3: YES in Step S106), the icon switching unit 203 switches, every predetermined switching time, the acquired icons for display in the vicinity of the user's finger 402 in the order in which the icons are acquired (FIG. 3: Step S107). Note that a case where the press by the user's finger 402 is not continued (FIG. 3: NO in Step S106) will be described later.

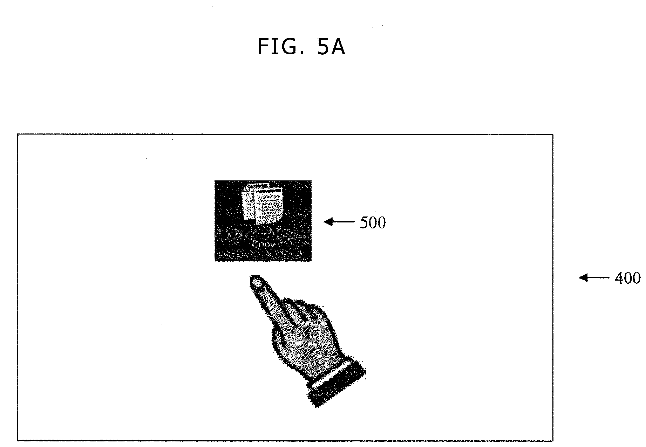

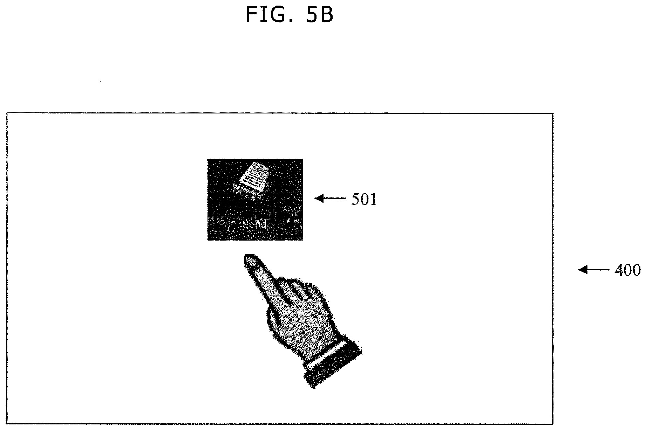

Here, the method of switching the icons for display by the icon switching unit 203 is not limited to any particular method. For example, as shown in FIG. 5A, the icon switching unit 203 displays a first icon 500 in the vicinity above the user's finger 402, and times elapsed time since the start of the display of the first icon 500 with a predetermined timer. The first icon 500 refers to the firstly-acquired "Copy" icon. The icon switching unit 203 then determines whether or not the elapsed time exceeds preset switching time (for example, two seconds). If the elapsed time does not exceed the switching time as a result of the above-described determination, the icon switching unit 203 then continues to display the first icon 500. If the elapsed time exceeds the switching time, the icon switching unit 203 then erases the first icon 500, displays a subsequently-acquired second icon 501 in the vicinity above the user's finger 402 as shown in FIG. 5B, and again times elapsed time since the start of the display of the second icon 501. The second icon 501 refers to the secondly-acquired "Send" icon. In this manner, the icon switching unit 203 sequentially switches a plurality of icons for display.

If the above-described elapsed time exceeds the above-described switching time since the lastly-acquired icon is displayed, the icon switching unit 203 then erases the above-described lastly-acquired icon, and returns to the beginning to display the firstly-acquired icon.

Thus, continuously touching the touch panel by the finger 402 of the user for the fingerprint authentication enables the user authentication and the switching of icons for display to be performed by a single operation.

When the icon switching unit 203 switches the icons for display, the icon switching unit 203 notifies a switching-time changing unit 204 of such switching. The notified switching-time changing unit 204 determines whether or not the pressing pressure (contact pressure) of the user's finger 402 continuously performing the above-described press (contact) is changed (FIG. 3: Step S108) . The method of determining a change in the pressing pressure is not limited to any particular method. For example, the switching-time changing unit 204 determines if the pressing pressure of the user's finger 402 continuously performing the contact reaches a preset high pressing pressure or low pressing pressure. When the pressing pressure reaches the high pressing pressure, the switching-time changing unit 204 determines that the pressing pressure is increased. When the pressing pressure reaches the low pressing pressure, on the other hand, the switching-time changing unit 204 determines that the pressing pressure is decreased. When the pressing pressure does not change to the high pressing pressure or the low pressing pressure, the switching-time changing unit 204 determines that the pressing pressure is unchanged.

When the above-described pressing pressure is unchanged as a result of the above-described determination (FIG. 3: NO in Step S108), the switching-time changing unit 204 performs nothing special, and just continues to determine whether or not the pressing pressure of the user's finger 402 is changed as long as the contact of the user's finger 402 is continued.

When the above-described pressing pressure is increased or the above pressing pressure is decreased as a result of the above-described determination in Step S108 (FIG. 3: YES in Step S108), the switching-time changing unit 204 changes the above-described switching time in accordance with the magnitude of the change in the above-described pressing pressure (FIG. 3: Step S109). For example, when the above-described pressing pressure is increased, the switching-time changing unit 204 changes the current switching time to shorter switching time (for example, one second). When the above-described pressing pressure is decreased, on the other hand, the switching-time changing unit 204 changes the current switching time to longer switching time (for example, three seconds). By changing the switching time in accordance with the magnitude of the pressing pressure of the user's finger 402 as described above, the user can change the speed at which the icons are switched for display with a one-touch operation.

Moreover, while switching the icons for display, the icon switching unit 203 determines whether the press by the user's finger 402 is still continued, i.e., whether or not the press by the user's finger 402 is released (FIG. 3: Step S110).

If the press by the user's finger 402 is not released, i.e., the press by the user's finger 402 is continued as a result of the above-described determination (FIG. 3: NO in Step S110), the icon switching unit 203 returns to Step S107 to continuously switch the icons for display. In this manner, the icons are switched for display while the user is pressing the login screen 400 by the finger 402 also for the fingerprint authentication. Thus, the user can search a desired icon by means of the switching of the icons for display.

A case where the press by the user's finger 402 is released, i.e., the press by the user's finger 402 is not continued as a result of the above-described determination in Step S110 (FIG. 3: YES in Step S110) corresponds to a case where the user releases the finger 402 from the login screen 400 since an icon for a function the user is about to use is on display. In this case, the icon switching unit 203 notifies a function transition unit 205 of such release. The notified function transition unit 205 transitions to the function of the icon displayed at the time when the user releases the press by the finger 402 (FIG. 3: Step S111).

Here, the method of transitioning to the function by the function transition unit 205 is not limited to any particular method. For example, if the icon 500 for the "Copy" function is displayed at the time when the user releases the press by the finger 402 as shown in FIG. 5A, the function transition unit 205 acquires the function 406 corresponding to the icon 500 from the icon table 403. The function transition unit 205 then determines if the function 406 corresponding to the icon 500 is a condition inputting function that requires the input of setting conditions or a processing function that requires no input of setting conditions. The condition inputting function corresponds to the function such as Copy or Send, for example, whereas the processing function corresponds to the function such as ID Card Copy, for example. Whether a predetermined function is the condition inputting function or processing function can be set in advance by an administrator, a manufacturer, or the like.

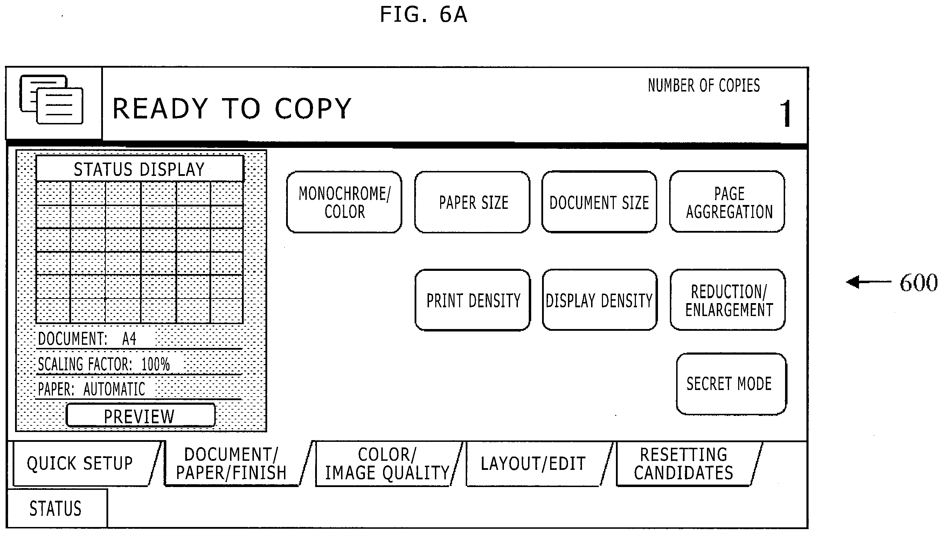

When the function 406 corresponding to the icon 500 is the condition inputting function as a result of the above-described determination, the function transition unit 205 displays an operation screen for the function 406 corresponding to the icon 500 on the touch panel of the operating unit 101. For example, when the function 406 corresponding to the icon 500 is the "Copy" function as shown in FIG. 5A, the function transition unit 205 displays an operation screen 600 for the "Copy" function on the touch panel as shown in FIG. 6A since the "Copy" function belongs to the condition inputting function. Thus, by releasing the finger 402 at appropriate timing, the user enables the direct transition to the operation screen 600 for the function corresponding to the desired icon by a one-touch operation. The user can then start to input the setting conditions for the function corresponding to the icon immediately.

Thereafter, the function transition unit 205, for example, notifies a display reception unit 206 of such transition, and the notified display reception unit 206 receives the input of the setting conditions from the user via the operation screen 600. For example, the user places a document on the document glass, inputs the setting conditions, and presses a start key. The display reception unit 206 then receives the input of the setting conditions and notifies a function execution unit 207 in the image processing apparatus 100 of such reception. The notified function execution unit 207 executes the function corresponding to the icon on the basis of the setting conditions.

When the function 406 corresponding to the icon 500 is the above-described processing function as a result of the above-described determination, on the other hand, the function transition unit 205 notifies the function execution unit 207 in the image processing apparatus 100 of the result. The notified function execution unit 207 directly executes the function 406 corresponding to the icon 500. For example, when the function 406 corresponding to the icon 500 is the "ID Card Copy" function, the function execution unit 207 immediately requests the placement of an ID card from the user to prompt the execution of the copy. Thus, when the function 406 corresponding to the icon 500 is the processing function, the user can immediately start the execution of the function.

By the way, if the user releases the press by the finger 402 immediately after the fingerprint authentication for some reason in Step S106, i.e., if the press by the user's finger 402 is not continued (FIG. 3: NO in Step S106), the icon switching unit 203 notifies the display reception unit 206 of such release. The notified display reception unit 206 displays an initial screen 601 that displays various functions in a selectable manner on the touch panel of the operating unit 101 (FIG. 3: Step S112).

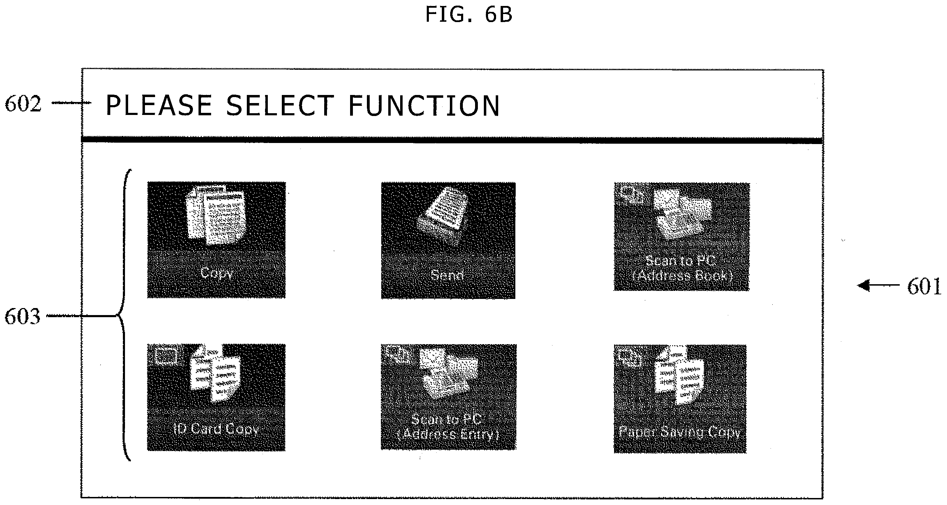

Here, as shown in FIG. 6B, a message 602 of "Please select function." and icons 603 for respective functions that can be pressed by a user are displayed on the aforementioned initial screen 601. The icons 603 are displayed, for example, by the acquisition of the icons 402 in the icon table 403 by the display reception unit 206. Note that when the user selects the icon 603 for a predetermined function, the display reception unit 206 displays an operation screen for the function corresponding to the selected icon 603 on the touch panel. Thus, the user can select a desired function from the initial screen 601 to cause the transition to the operation screen for the specified function.

Although the operating device of the present invention is employed as an operating device for an image processing apparatus, such as a multi-function peripheral, a copy machine, a printer, or a scanner in the embodiment of the present invention, the present invention is not limited thereto. For example, the operating device of the present invention may be employed as an operating device for an electronic device such as an image forming apparatus or an image transmission apparatus.

Moreover, although the operating device is configured to include the above-described units in the embodiment of the present invention, a program to implement each of the above-described units may be stored in a recording medium, and such a recording medium may be provided. In this configuration, the program is read out by the operating device, and the operating device implements each of the above-described units.

### Industrial Applicability

The operating device and the operating method according to the present invention can be applied to an operating device for an electronic device, for example.

## Claims

1. An operating device (101) for performing user authentication and controlling display of a screen, the operating device comprising:
a user authentication unit (201) configured to perform a fingerprint authentication operation by detecting an operation of pressing a user's finger (402) on a fingerprint reading region (401) in which fingerprint information of the user's finger (402) is read, reading the fingerprint information of the user's finger (402) and determining whether or not the read fingerprint information matches registered fingerprint information that is registered in advance;
an icon acquisition unit (202) configured, if the read fingerprint information matches the registered fingerprint information, to acquire icons (405; 500; 501; 603) indicating functions (406) that can be used by the user of the read fingerprint information;
an icon switching unit (203) configured to determine whether or not the operation of pressing by the user's finger (402) on the fingerprint reading region (401) continues; wherein
the icon switching unit (203) is further configured, if the read fingerprint information matches the registered fingerprint information and the operation of pressing by the user's finger (402) on the fingerprint reading region (401) continues, to switch, every predetermined switching time, the acquired icons (405; 500; 501; 603) for display in a vicinity of the user's finger (402) in order in which the icons (405; 500; 501; 603) are acquired, and
the icon switching unit (203) is further configured to time elapsed time since the start of the display of an acquired icon (500) with a predetermined timer, to determine whether or not the elapsed time exceeds a preset switching time, and to erase the acquired icon (405; 500; 603) and display a subsequently-acquired icon (405; 501; 603) if the elapsed time exceeds the preset switching time;
a function transition unit (205) configured, if the press by the user's finger (402) is released while the icons (405; 500; 501; 603) are switched for display, to perform transition to a function (406) of an icon (405; 500; 501; 603) displayed at a time when the press by the user's finger (402) is released, and
a display reception unit (206) configured, if the read fingerprint information matches the registered fingerprint information and the operation of pressing by the user's finger (402) on the fingerprint reading region (401) does not continue immediately after the fingerprint authentication operation, to display an initial screen (601) that displays icons (603) for respective various functions in a selectable manner, and when the user selects the icon (603) for a predetermined function, to display an operation screen for the function corresponding to the selected icon (603).

2. The operating device according to claim 1, wherein the icon acquisition unit (202) is configured to acquire the icons (405; 500; 501; 603) in descending order from a function (406) having the highest frequency (407) of use for the user.

3. The operating device according to claim 1, further comprising a switching-time changing unit (204) configured to determine whether or not a pressing pressure of the user's finger (402) is changed while the icons (405; 500; 501; 603) are switched for display and to change, if the pressing pressure is changed, the switching time in accordance with magnitude of the change in the pressing pressure.

4. An operating method for performing user authentication and controlling display of a screen, the operating method comprising:
a user authentication step of performing a fingerprint authentication operation by detecting an operation of pressing a user's finger (402) on a fingerprint reading region (401) in which fingerprint information of the user's finger (402) is read, reading the fingerprint information of the user's finger (402) and determining whether or not the read fingerprint information matches registered fingerprint information that is registered in advance;
a determining step of determining whether or not the operation of pressing by the user's finger (402) on the fingerprint reading region (401) continues;
an icon acquisition step of, if the read fingerprint information matches the registered fingerprint information, acquiring icons (405; 500; 501; 603) indicating functions (406) that can be used by the user of the read fingerprint information;
an icon switching step of, if the read fingerprint information matches the registered fingerprint information and the operation of pressing by the user's finger (402) on the fingerprint reading region (401) continues, switching, every predetermined switching time, the acquired icons (405; 500; 501; 603) for display in the vicinity of the user's finger (402) in order in which the icons (405; 500; 501; 603) are acquired, and
timing elapsed time since the start of the display of an acquired icon (500) with a predetermined timer, determining whether or not the elapsed time exceeds a preset switching time, and erasing the acquired icon (405; 500; 603) and displaying a subsequently-acquired icon (405; 501; 603) if the elapsed time exceeds the preset switching time; and
a function transition step of, if the press by the user's finger (402) is released while the icons (405; 500; 501; 603) are switched for display, transitioning to a function (406) of an icon (405; 500; 501; 603) displayed at a time when the press by the user's finger (402) is released, and
a display reception step of, if the read fingerprint information matches the registered fingerprint information and the operation of pressing by the user's finger (402) on the fingerprint reading region (401) does not continue immediately after the fingerprint authentication operation, displaying an initial screen (601) that displays icons (603) for respective various functions in a selectable manner, and when the user selects the icon (603) for a predetermined function, displaying an operation screen for the function corresponding to the selected icon (603).

## Patentansprüche

1. Bedienvorrichtung (101) zum Durchführen einer Nutzerauthentifizierung und zum Steuern eines Anzeigens eines Bildschirms, wobei die Bedienvorrichtung aufweist:
eine Nutzerauthentifizierungseinheit (201), die ausgelegt ist, einen Fingerabdruckauthentifizierungsbetrieb durch Erfassen eines Betriebes eines Drückens eines Fingers (402) eines Nutzers auf einen Fingerabdrucklesebereich (401), in dem Fingerabdruckinformationen des Fingers (402) des Nutzers gelesen werden, Lesen der Fingerabdruckinformationen des Fingers (402) des Nutzers und Bestimmen, ob die gelesenen Fingerabdruckinformationen mit registrierten Fingerabdruckinformationen übereinstimmen, die im Voraus registriert werden, durchzuführen;
eine Piktogrammerlangungseinheit (202), die ausgelegt ist, wenn die gelesenen Fingerabdruckinformationen mit den registrierten Fingerabdruckinformationen übereinstimmen, Piktogramme (405; 500; 501; 603) zu erlangen, die Funktionen (406) angeben, die von dem Nutzer der gelesenen Fingerabdruckinformationen verwendet werden können;
eine Piktogrammwechseleinheit (203), die ausgelegt ist, zu bestimmen, ob der Betrieb eines Drückens durch den Finger (402) des Nutzers auf den Fingerabdrucklesebereich (401) andauert; wobei
die Piktogrammwechseleinheit (203) außerdem ausgelegt ist, wenn die gelesenen Fingerabdruckinformationen mit den registrierten Fingerabdruckinformationen übereinstimmen und der Betrieb eines Drückens durch den Finger (402) des Nutzers auf den Fingerabdrucklesebereich (401) andauert, zu jeder vorbestimmten Wechselzeit die erlangten Piktogramme (405; 500; 501; 603) zum Anzeigen in der Nähe des Fingers (402) des Nutzers in der Reihenfolge zu wechseln, in denen die Piktogramme (405; 500; 501;603) erlangt werden, und
die Piktogrammwechseleinheit (203) außerdem ausgelegt ist, eine seit dem Start des Anzeigens eines erlangten Piktogramms (500) verstrichene Zeit mit einem vorbestimmten Zeitnehmer zu messen, um zu bestimmen, ob die verstrichene Zeit eine voreingestellte Wechselzeit überschreitet, und das erlangte Piktogramm (405; 500; 603) zu löschen und ein anschließendes erlangtes Piktogramm (405; 501; 603) anzuzeigen, wenn die verstrichene Zeit die voreingestellte Wechselzeit überschreitet;
eine Funktionsübergangseinheit (205), die ausgelegt ist, wenn der Druck durch den Finger (402) des Nutzers freigegeben wird, während die Piktogramme (405; 500; 501; 603) zum Anzeigen gewechselt werden, einen Übergang zu einer Funktion (406) eines Piktogramms (405; 500; 501; 603) durchzuführen, das zu einer Zeit angezeigt wird, zu der der Druck durch den Finger (402) des Nutzers freigegeben wird, und
eine Anzeigeempfangseinheit (206), die ausgelegt ist, wenn die gelesenen Fingerabdruckinformationen mit den registrierten Fingerabdruckinformationen übereinstimmen und der Betrieb eines Drückens durch den Finger (402) des Nutzers auf den Fingerabdrucklesebereich (401) nicht unmittelbar nach dem Fingerabdruckauthentifizierungsbetrieb andauert, einen Anfangsbildschirm (601) anzuzeigen, der Piktogramme (603) für jeweilige verschiedene Funktionen auf auswählbare Weise anzeigt, und wenn der Nutzer das Piktogramm (603) für eine vorbestimmte Funktion auswählt, einen Bedienbildschirm für die Funktion, die dem ausgewählten Piktogramm (603) entspricht, anzuzeigen.

2. Bedienvorrichtung nach Anspruch 1, wobei die Piktogrammerlangungseinheit (202) ausgelegt ist, die Piktogramme (405; 500; 501; 603) in absteigender Reihenfolge von einer Funktion (406), die die höchste Häufigkeit (407) einer Verwendung für den Nutzer aufweist, zu erlangen.

3. Bedienvorrichtung nach Anspruch 1, die außerdem eine Wechselzeitänderungseinheit (204) aufweist, die ausgelegt ist, zu bestimmen, ob ein Drückdruck des Fingers (402) des Nutzers geändert wird, während die Piktogramme (405; 500; 501; 603) zum Anzeigen gewechselt werden, und wenn der Drückdruck geändert wird, die Wechselzeit entsprechend einer Stärke der Änderung des Drückdruckes zu ändern.

4. Bedienverfahren zum Durchführen einer Nutzerauthentifizierung und zum Steuern eines Anzeigens eines Bildschirms, wobei das Bedienverfahren aufweist:
einen Nutzerauthentifizierungsschritt zum Durchführen eines Fingerabdruckauthentifizierungsbetriebs durch Erfassen eines Betriebs eines Drückens eines Fingers (402) eines Nutzers auf einen Fingerabdrucklesebereich (401), in dem Fingerabdruckinformationen des Fingers (402) des Nutzers gelesen werden, Lesen der Fingerabdruckinformationen des Fingers (402) des Nutzers, und Bestimmen, ob die gelesenen Fingerabdruckinformationen mit registrierten Fingerabdruckinformationen übereinstimmen, die im Voraus registriert werden;
einen Bestimmungsschritt zum Bestimmen, ob der Betrieb eines Drückens durch den Finger (402) des Nutzers auf den Fingerabdrucklesebereich (401) andauert;
einen Piktogrammerlangungsschritt zum, wenn die gelesenen Fingerabdruckinformationen mit den registrierten Fingerabdruckinformationen übereinstimmen, Erlangen von Piktogrammen (405; 500; 501; 603), die Funktionen (406) angeben, die von dem Nutzer der gelesenen Fingerabdruckinformationen verwendet werden können;
einen Piktogrammwechselschritt zum, wenn die gelesenen Fingerabdruckinformationen mit den registrierten Fingerabdruckinformationen übereinstimmen und der Betrieb eines Drückens durch den Finger (402) des Nutzers auf den Fingerabdrucklesebereich (401) andauert, Wechseln zu jeder vorbestimmten Wechselzeit der erlangten Piktogramme (405; 500; 501; 603) zum Anzeigen in der Nähe des Fingers (402) des Nutzers in einer Reihenfolge, in der die Piktogramme (405; 500; 501; 603) erlangt werden, und
zum Messen einer seit dem Start des Anzeigens eines erlangten Piktogramms (500) verstrichenen Zeit mit einem vorbestimmten Zeitnehmer, um zu bestimmen, ob die verstrichene Zeit eine voreingestellte Wechselzeit überschreitet, und zum Löschen des erlangten Piktogramms (405; 500; 603) und zum Anzeigen eines anschließend erlangten Piktogramms (405; 501; 603), wenn die verstrichene Zeit die voreingestellte Wechselzeit überschreitet; und
einen Funktionsübergangsschritt zum, wenn der Druck durch den Finger (402) des Nutzers freigegeben wird, während die Piktogramme (405; 500; 501; 603) zum Anzeigen gewechselt werden, Übergehen zu einer Funktion (406) eines Piktogramms (405; 500; 501; 603), das zu einer Zeit angezeigt wird, zu der der Druck durch den Finger (402) des Nutzers freigegeben wird, und
einen Anzeigeempfangsschritt zum, wenn die gelesenen Fingerabdruckinformationen mit den registrierten Fingerabdruckinformationen übereinstimmen und der Betrieb eines Drückens durch den Finger (402) des Nutzers auf den Fingerabdrucklesebereich (401) nicht unmittelbar nach dem Fingerabdruckauthentifizierungsbetrieb andauert, Anzeigen eines Anfangsbildschirms (601), der Piktogramme (603) für jeweilige verschiedene Funktionen auf auswählbare Weise anzeigt, und wenn der Nutzer das Piktogramm (603) für eine vorbestimmte Funktion auswählt, zum Anzeigen eines Betriebsbildschirms für die Funktion, die dem ausgewählten Piktogramm (603) entspricht.

## Revendications

1. Dispositif d'exploitation (101) permettant d'effectuer une authentification d'utilisateur et de commander l'affichage d'un écran, le dispositif d'exploitation comprenant :
une unité d'authentification d'utilisateur (201) conçue pour effectuer une opération d'authentification par empreinte digitale en détectant une opération de pression d'un doigt de l'utilisateur (402) sur une région de lecture d'empreinte digitale (401) dans laquelle des informations d'empreinte digitale du doigt de l'utilisateur (402) sont lues, en lisant les informations d'empreinte digitale du doigt de l'utilisateur (402) et en déterminant si les informations d'empreinte digitale lues concordent ou non avec des informations d'empreinte digitale enregistrées qui sont enregistrées à l'avance ;
une unité d'acquisition d'icônes (202) conçue, si les informations d'empreinte digitale lues concordent avec les informations d'empreinte digitale enregistrées, pour acquérir des icônes (405 ; 500 ; 501 ; 603) indiquant des fonctions (406) qui peuvent être utilisées par l'utilisateur des informations d'empreinte digitale lues ;
une unité de commutation d'icônes (203) conçue pour déterminer si l'opération de pression du doigt de l'utilisateur (402) sur la région de lecture d'empreinte digitale (401) continue ou non ;
dans lequel :
l'unité de commutation d'icônes (203) est conçue en outre, si les informations d'empreinte digitale lues concordent avec les informations d'empreinte digitale enregistrées et que l'opération de pression du doigt de l'utilisateur (402) sur la région de lecture d'empreinte digitale (401) continue, pour commuter, pendant chaque durée prédéterminée de commutation, les icônes acquises (405 ; 500 ; 501 ; 603) à des fins d'affichage au voisinage du doigt de l'utilisateur (402) dans l'ordre dans lequel les icônes (405 ; 500 ; 501 ; 603) sont acquises, et
l'unité de commutation d'icônes (203) est conçue en outre pour mesurer le temps écoulé depuis le début de l'affichage d'une icône acquise (500) avec un compteur de temps prédéterminé, afin de déterminer si le temps écoulé dépasse ou non une durée prédéfinie de commutation, et pour effacer l'icône acquise (405 ; 500 ; 603) et afficher une icône ultérieurement acquise (405 ; 501 ; 603) si le temps écoulé dépasse la durée prédéfinie de commutation ;
une unité de transition de fonction (205) conçue, si la pression du doigt de l'utilisateur (402) est relâchée pendant que les icônes (405 ; 500 ; 501 ; 603) sont commutées à des fins d'affichage, pour effectuer une transition vers une fonction (406) d'icône (405 ; 500 ; 501 ; 603) affichée au moment où la pression du doigt de l'utilisateur (402) est relâchée, et
une unité de réception d'affichage (206) conçue, si les informations d'empreinte digitale lues concordent avec les informations d'empreinte digitale enregistrées et que l'opération de pression du doigt de l'utilisateur (402) sur la région de lecture d'empreinte digitale (401) ne continue pas immédiatement après l'opération d'authentification par empreinte digitale, pour afficher un écran initial (601) qui affiche des icônes (603) de diverses fonctions respectives de manière sélective, et lorsque l'utilisateur sélectionne l'icône (603) d'une fonction prédéterminée, pour afficher un écran de commande de la fonction correspondant à l'icône sélectionnée (603).

2. Dispositif d'exploitation selon la revendication 1, dans lequel l'unité d'acquisition d'icônes (202) est conçue pour acquérir les icônes (405 ; 500 ; 501 ; 603) dans l'ordre décroissant à partir d'une fonction (406) dont la fréquence d'utilisation (407) est la plus élevée pour l'utilisateur.

3. Dispositif d'exploitation selon la revendication 1, comprenant en outre une unité de modification de durée de commutation (204) conçue pour déterminer si une valeur de pression du doigt de l'utilisateur (402) varie ou non pendant que les icônes (405 ; 500 ; 501 ; 603) sont commutées à des fins d'affichage et pour modifier, si la valeur de pression varie, la durée de commutation en fonction de la grandeur de variation de la valeur de pression.

4. Procédé d'exploitation permettant d'effectuer une authentification d'utilisateur et de commander l'affichage d'un écran, le procédé d'exploitation comprenant :
une étape d'authentification d'utilisateur consistant à effectuer une opération d'authentification par empreinte digitale en détectant une opération de pression d'un doigt de l'utilisateur (402) sur une région de lecture d'empreinte digitale (401) dans laquelle des informations d'empreinte digitale du doigt de l'utilisateur (402) sont lues, en lisant les informations d'empreinte digitale du doigt de l'utilisateur (402) et en déterminant si les informations d'empreinte digitale lues concordent ou non avec des informations d'empreinte digitale enregistrées qui sont enregistrées à l'avance ;
une étape de détermination consistant à déterminer si l'opération de pression du doigt de l'utilisateur (402) sur la région de lecture d'empreinte digitale (401) continue ou non ;
une étape d'acquisition d'icônes consistant, si les informations d'empreinte digitale lues concordent avec les informations d'empreinte digitale enregistrées, à acquérir des icônes (405 ; 500 ; 501 ; 603) indiquant des fonctions (406) qui peuvent être utilisées par l'utilisateur des informations d'empreinte digitale lues ;
une étape de commutation d'icônes consistant, si les informations d'empreinte digitale lues concordent avec les informations d'empreinte digitale enregistrées et que l'opération de pression du doigt de l'utilisateur (402) sur la région de lecture d'empreinte digitale (401) continue, à commuter, pendant chaque durée prédéterminée de commutation, les icônes acquises (405 ; 500 ; 501 ; 603) à des fins d'affichage au voisinage du doigt de l'utilisateur (402) dans l'ordre dans lequel les icônes (405 ; 500 ; 501 ; 603) sont acquises, et
à mesurer le temps écoulé depuis le début de l'affichage d'une icône acquise (500) avec un compteur de temps prédéterminé, à déterminer si le temps écoulé dépasse ou non une durée prédéfinie de commutation, et à effacer l'icône acquise (405 ; 500 ; 603) et afficher une icône ultérieurement acquise (405 ; 501 ; 603) si le temps écoulé dépasse la durée prédéfinie de commutation ; et
une étape de transition de fonction consistant, si la pression du doigt de l'utilisateur (402) est relâchée pendant que les icônes (405 ; 500 ; 501 ; 603) sont commutées à des fins d'affichage, à effectuer une transition vers une fonction (406) d'icône (405 ; 500 ; 501 ; 603) affichée au moment où la pression du doigt de l'utilisateur (402) est relâchée, et
une étape de réception d'affichage consistant, si les informations d'empreinte digitale lues concordent avec les informations d'empreinte digitale enregistrées et que l'opération de pression du doigt de l'utilisateur (402) sur la région de lecture d'empreinte digitale (401) ne continue pas immédiatement après l'opération d'authentification par empreinte digitale, à afficher un écran initial (601) qui affiche des icônes (603) de diverses fonctions respectives de manière sélective, et lorsque l'utilisateur sélectionne l'icône (603) d'une fonction prédéterminée, à afficher un écran de commande de la fonction correspondant à l'icône sélectionnée (603).
